# EUROPEAN PATENT SPECIFICATION

(11) **EP 2 075 475 B1**
(45) Date of publication and mention of the grant of the patent: **15.06.2011**
(21) Application number: 07425831.0
(22) Date of filing: 28.12.2007
(51) Int. Cl.: F16B 5/02

(54) **Device for eliminating clearance**
Toleranzausgleichsanordnung
Dispositif de compensation de tolérance

(43) Date of publication of application: 01.07.2009
(73) Proprietor: Fontana R.D. S.r.l., 20050 Veduggio con Colzano (MI) (IT)
(72) Inventor: Galvagno, Antonio, 10024 Moncalieri (To) (IT)
(74) Representative: Gerbino, Angelo

(56) References cited:
- EP-A- 1 666 342
- EP-A- 1 832 759
- WO-A-2004/033926
- DE-U1- 20 119 112

## Description

The present invention relates to a device for eliminating clearance, in particular in the case where it is required to ensure assembly of two parts at a predefined distance. These parts may, for example, consist of a plate fixed to the dashboard of a motor vehicle and an underlying plate forming part of the body.

More specifically such device has the features listed in the preamble of claim 1 which follows.

Known devices of this kind are disclosed in DE-201 19 112, EP-A-1 832 759 and EP-A-1 666 342.

The object of the present invention is to provide a device for eliminating clearance, which has a simple design and is very efficient during use.

According to the invention, this object is achieved by means of a device having the features disclosed in claim 1 which follows.

During use of the device according to the invention, the pin is screwed inside a female thread integral with the plate forming part of the vehicle body, while ensuring that the bush has already been screwed beforehand inside the cavity of the main part or screwing it inside it subsequently. Then, the shank of the screw is screwed inside the tubular body of the bush after passing it through a hole formed in the plate fixed to the dashboard and arranged at the desired distance from the plate of the body. After the head of the screw has come into contact against the upper surface of the plate fixed to the dashboard, further screwing of the shank of the screw inside the bush causes unscrewing of the latter from the cavity until it is stopped by the bottom side of the plate fixed to the dashboard. Said plate therefore remains locked in position between the screw head and the top of the bush at a desired distance from the plate forming part of the body.

Further advantages and characteristic features of the present invention will become clear from the detailed description below, provided by way of a non-limiting example with reference to the accompanying drawings in which:
Figure 1 is an elevation and sectioned view of a device according to the invention mounted between two plates, and
Figures 2 to 4 are perspective schematic views of subsequent stages in the procedure for assembly of the device according to the invention between the two plates.

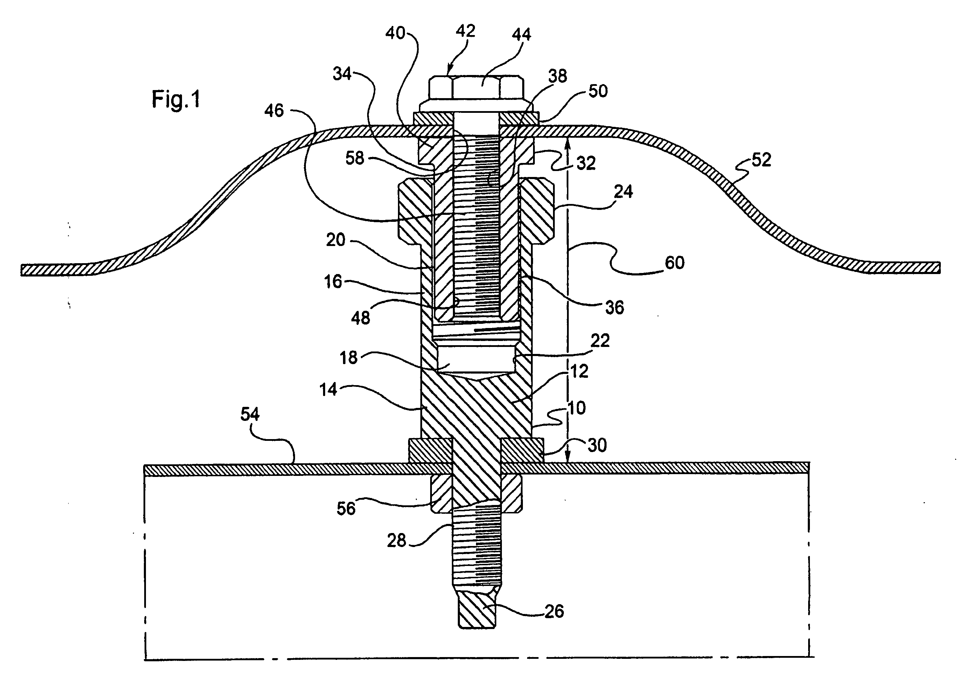

A device for eliminating clearance comprises (Fig. 1) a main part 10 which in turn includes a cup-shaped body 12 formed by a bottom wall 14 and by a side wall 16 which define inside them a cavity 18 which opens outwards. The latter has, extending from the inlet mouth, a first section, the side wall of which has a first thread 20 formed therein and a second narrower bottom section 22 with smooth walls. A shaped flange 24, in particular with a polygonal profile, protrudes radially from the outer surface of the side wall 16 of the cup-shaped body 12 in the region of the inlet mouth of the cavity 18.

A pin 26 protrudes from the outer surface of the bottom wall 14 of the cup-shaped body 12 and has, on its outer side surface, a second thread 28 having a direction opposite to that of the first thread 20. A first washer 30 is mounted coaxially around a proximal section of the pin 26.

A bush 32 is screwed inside the cavity 18, said bush having a tubular body 34 with a third thread 36 substantially over its entire outer surface and a fourth thread 38 over its inner surface. The third thread 36 complements the first thread 20 so as to allow screwing of the bush 32 inside the cavity 18. The fourth thread 38 has a direction the same as that of the second thread 28.

The bush 32 also has a shaped flange 40 which protrudes radially from the outer surface of its tubular body 34 at an end projecting outside the cavity 18 of the body 12.

A screw 42 has a head 44 and a shank 46 with a fifth thread 48 complementing the fourth thread 38 so that the shank 46 is screwed inside the tubular body 34 of the bush 32. Moreover, a second washer 50 is mounted coaxially around the shank 46 immediately underneath the head 44.

Use of the device described above, in order to ensure assembly of two parts at a predefined distance, for example a plate 52 fixed to the dashboard of a motor vehicle and an underlying plate 54 forming part of the body, is as follows.

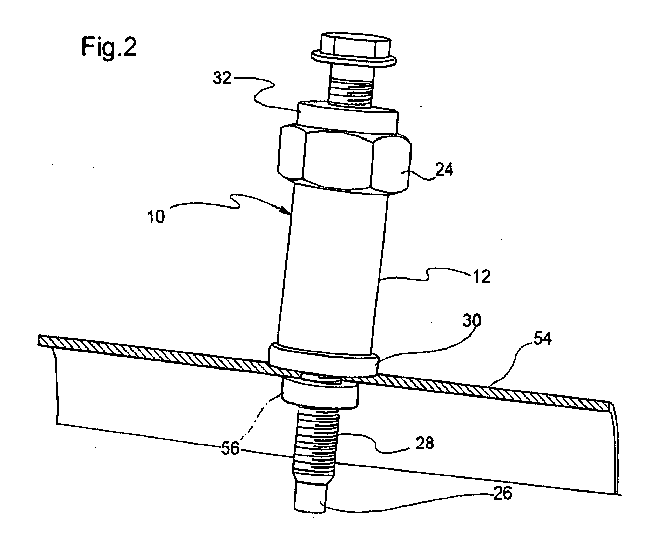

Firstly (Fig. 2), the pin 26 of the main part 10 is screwed inside a female thread 56 integral with the plate 54, by acting on the shaped flange 24 until the bottom wall 14 of the cup-shaped body 12 comes into contact, via the first washer 30, with the upper side of the plate 54. By acting on the shaped flange 40, the bush 32 is then screwed into the cavity 18 of the main part 10 until the flange 40 comes into contact against the flange 24 of the main part 10 or is positioned at a desired distance from the latter.

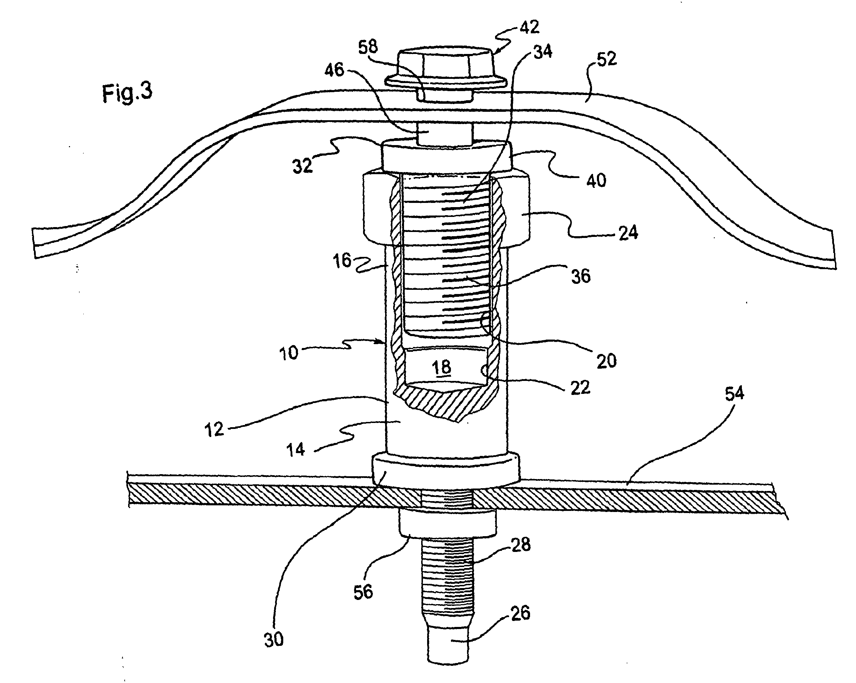

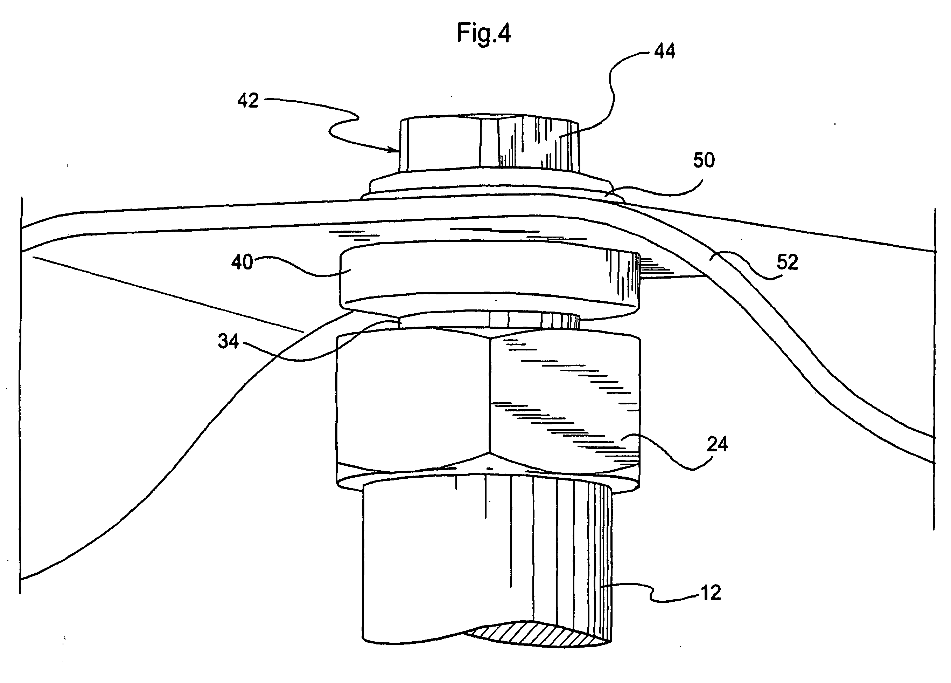

Then (Figs. 3 and 4) the plate 52 fixed to the dashboard is arranged above the plate 54 at the desired distance, making sure that a hole 58 formed therein is aligned with the cavity 18 inside which the bush 32 has been screwed. Then the shank 46 of the screw 42 is passed through the hole 58 and is screwed inside the tubular body 34 of the bush 32 owing to the mating connection existing between the fourth thread 38 and the fifth thread 48. When the head 44 of the screw 42 comes into contact against the upper side of the plate 52 of the dashboard via the second washer 50, further screwing of the shank 46 inside the bush 32 causes unscrewing of the latter from the cavity owing to the opposite directions of the respective threads. Typically, in fact, the first thread 20 and the third thread 36 are left-handed and the fourth thread 38 and the fifth thread 48 are right-handed or vice versa. The second thread 28 also has the same direction as the fourth thread 38 and the fifth thread 48 so that there is no risk that screwing of the screw 42 may cause unscrewing of the main part 10 from the female thread 56; on the contrary, if anything, it further increases tightening thereof.

The bush 32 gradually moves out from the cavity 18 until it is stopped by the bottom side of the plate 52. In this way very stable assembly of the two plates 52, 54 exactly at the desired distance 60 is obtained (Fig. 1), with any existing clearance being eliminated. As a result it is possible to avoid vibrations and eliminate noisiness and the risk of the connection becoming loose.

Obviously, without altering the principle of the invention, the constructional details and the embodiments may be widely varied with respect to that described purely by way of example, without thereby departing from the scope of the invention as defined in the accompanying claims. For example, the first thread 20 may extend only over a part of the first section of the cavity 18 of the cup-shaped body 12 and the third thread 36 only over a part of the outer surface of the body 34 of the bush 32 so as to reduce weakening of the mechanical strength which is proportional to the extension of the threads in the axial direction.

## Claims

1. Device for eliminating clearance comprising:
- a main part (10) which includes a cup-shaped body (12) with a side wall (16) and an internal cavity (18) which opens outwards, the inner surface of the side wall (16) having a first thread (20),
- a bush (32) having a tubular body (34) with a third thread (36) on its outer surface and a fourth thread (38) on its inner surface, said third thread (36) complementing said first thread (20) so that the bush (32) can be at least partly screwed into the cavity (18) of the main body (10), and
- a screw (42) having a head (44) and a shank (46) with a fifth thread (48) complementing said fourth thread (38) so that the shank (46) of the screw (42) can be screwed inside the tubular body (34) of the bush (32),
said device being **characterized in that** said body (12) has also a bottom wall (14) defining with said side wall (16) said cavity (18), **in that** the outer surface of the bottom wall (14) has, protruding therefrom, a pin (26) having on its outer side surface a second thread (28) with a direction opposite to that of the first thread (20), and **in that** said fourth thread (38) has a direction the same as that of the second thread (28).

2. Device according to Claim 1, **characterized in that** it also comprises a first washer (30) mounted coaxially around a proximal section of the pin (26).

3. Device according to any one of the preceding claims, **characterized in that** it also comprises a second washer (50) mounted coaxially around the shank (46) of the screw (42) immediately underneath the head (44).

4. Device according to any one of the preceding claims, **characterized in that** said main part (10) has a shaped flange (24) which protrudes radially from the outer surface of the side wall (16) of the cup-shaped body (12) in the region of the inlet mouth of the cavity (18).

5. Device according to any one of the preceding claims, **characterized in that** said bush (32) has a shaped flange (40) which protrudes radially from the outer surface of the side wall of the tubular body (34) of the bush (32) at one end thereof projecting outside said cavity (18).

6. Device according to any one of the preceding claims, **characterized in that** said cavity (18) has, extending from the inlet mouth, a first section which has said first thread (20) formed therein and a second bottom section (22) with smooth walls narrower than the first section.

7. Device according to any one of the preceding claims, **characterized in that** said first thread (20) extends axially along the whole of the first section of the cavity (18) of the cup-shaped body (12) and said third thread (36) extends substantially over the whole outer surface (34) of the bush (32).

8. Device according to any one of the preceding Claims 1 to 6, **characterized in that** said first thread (20) extends over a part of the first section of the cavity (18) of the cup-shaped body (12) and said third thread (36) extends over a part of the outer surface of the body (34) of the bush (32).

## Patentansprüche

1. Toleranzausgleichsvorrichtung, wobei die Vorrichtung umfasst:
- einen Hauptteil (10), der einen topfförmigen Körper (12) mit einer Seitenwand (16) und einem inneren Hohlraum (18) aufweist, der sich nach außen öffnet, wobei die Innenfläche der Seitenwand (16) mit einem ersten Gewinde (20) versehen ist,
- eine Hülse (32), die einen rohrförmigen Körper (34) besitzt, der an seiner Außenfläche ein drittes Gewinde (36) und an seiner Innenfläche ein viertes Gewinde (38) trägt, wobei das dritte Gewinde (36) das erste Gewinde (20) so ergänzt, dass die Hülse (32) zumindest teilweise in den Hohlraum (18) des Hauptkörpers (10) geschraubt werden kann, sowie
- eine Schraube (42), die einen Kopf (44) und einen Schaft (46) mit einem fünften Gewinde (48) besitzt, das das vierte Gewinde (38) so ergänzt, dass der Schaft (46) der Schraube (42) in den rohrförmigen Körper (34) der Hülse (32) geschraubt werden kann,
wobei die Vorrichtung **dadurch gekennzeichnet ist, dass** der Körper (12) weiters eine Bodenwand (14) besitzt, die mit der Seitenwand (16) den Hohlraum (18) bildet, dass von der Außenfläche der Bodenwand (14) ein Zapfen (26) aufragt, der an seiner äußeren Seitenfläche ein zweites Gewinde (28) trägt, das gegenläufig zum ersten Gewinde (20) ist, und dass das vierte Gewinde (38) eine Richtung besitzt, die gleich der Richtung des zweiten Gewindes (28) ist.

2. Vorrichtung gemäß Anspruch 1, **dadurch gekennzeichnet, dass** die Vorrichtung weiters eine erste Scheibe (30) umfasst, die koaxial rund um einen proximalen Teil des Zapfens (26) angebracht ist.

3. Vorrichtung gemäß irgendeinem der bisherigen Ansprüche, **dadurch gekennzeichnet, dass** die Vorrichtung weiters eine zweite Scheibe (50) umfasst, die koaxial rund um den Schaft (46) der Schraube (42) unmittelbar unterhalb des Kopfs (44) angebracht ist.

4. Vorrichtung gemäß irgendeinem der bisherigen Ansprüche, **dadurch gekennzeichnet, dass** der Hauptteil (10) einen Formflansch (24) besitzt, der radial von der Außenfläche der Seitenwand (16) des topfförmigen Körpers (12) im Bereich der Einlassöffnung des Hohlraums (18) aufragt.

5. Vorrichtung gemäß irgendeinem der bisherigen Ansprüche, **dadurch gekennzeichnet, dass** die Hülse (32) einen Formflansch (40) besitzt, der radial von der Außenfläche der Seitenwand des rohrförmigen Körpers (34) der Hülse (32) an einem von ihren Enden aufragt, wobei er sich außerhalb des Hohlraums (18) erstreckt.

6. Vorrichtung gemäß irgendeinem der bisherigen Ansprüche, **dadurch gekennzeichnet, dass** der Hohlraum (18) einen ersten Teil, der von der Einlassöffnung verläuft und das erste Gewinde (20) trägt, das darin ausgebildet ist, sowie einen zweiten Bodenteil (22) besitzt, der glatte Wände besitzt und schmäler als der erste Teil ist.

7. Vorrichtung gemäß irgendeinem der bisherigen Ansprüche, **dadurch gekennzeichnet, dass** das erste Gewinde (20) axial entlang des gesamten ersten Teils des Hohlraums (18) des topfförmigen Körpers (12) verläuft und das dritte Gewinde (36) im Wesentlichen über die gesamte Außenfläche (34) der Hülse (32) verläuft.

8. Vorrichtung gemäß irgendeinem der bisherigen Ansprüche 1 bis 6, **dadurch gekennzeichnet, dass** das erste Gewinde (20) über einen Teil des ersten Teils des Hohlraums (18) des topfförmigen Körpers (12) verläuft und das dritte Gewinde (36) über einen Teil der Außenfläche des Körpers (34) der Hülse (32) verläuft.

## Revendications

1. Dispositif de compensation de tolérance comprenant :
une partie principale (10) qui comprend un corps en forme de coupelle (12) avec une paroi latérale (16) et une cavité interne (18) qui s'ouvre vers l'extérieur, la surface interne de la paroi latérale (16) ayant un premier filetage (20),
une bague (32) ayant un corps tubulaire (34) avec un troisième filetage (36) sur sa surface externe et un quatrième filetage (38) sur sa surface interne, ledit troisième filetage (36) complétant ledit premier filetage (20) de sorte que la bague (32) peut être au moins partiellement vissée dans la cavité (18) du corps principal (10), et
une vis (42) ayant une tête (44) et une tige (46) avec un cinquième filetage (48) complétant ledit quatrième filetage (38) de sorte que la tige (46) de la vis (42) peut être vissée à l'intérieur du corps tubulaire (34) de la bague (32),
ledit dispositif étant **caractérisé en ce que** ledit corps (12) a également une paroi inférieure (14) définissant avec ladite paroi latérale (16), ladite cavité (18), **en ce que** la surface externe de la paroi inférieure (14) a, faisant saillie de cette dernière, une broche (26) ayant, sur sa surface latérale externe, un deuxième filetage (28) avec un sens opposé à celui du premier filetage (20), et **en ce que** ledit quatrième filetage (38) a le même sens que celui du deuxième filetage (28).

2. Dispositif selon la revendication 1, **caractérisé en ce qu'**il comprend également une première rondelle (30) montée de manière coaxiale autour d'une section proximale de la broche (26).

3. Dispositif selon l'une quelconque des revendications précédentes, **caractérisé en ce qu'**il comprend également une deuxième rondelle (50) montée de manière coaxiale autour de la tige (46) de la vis (42) immédiatement au-dessous de la tête (44).

4. Dispositif selon l'une quelconque des revendications précédentes, **caractérisé en ce que** ladite partie principale (10) a un rebord profilé (24) qui fait saillie radialement de la surface externe de la paroi latérale (16) du corps en forme de coupelle (12) dans la région de l'embouchure d'entrée de la cavité (18).

5. Dispositif selon l'une quelconque des revendications précédentes, **caractérisé en ce que** ladite bague (32) a un rebord profilé (40) qui fait saillie radialement de la surface externe de la paroi latérale du corps tubulaire (34) de la bague (32) au niveau de son extrémité faisant saillie à l'extérieur de ladite cavité (18).

6. Dispositif selon l'une quelconque des revendications précédentes, **caractérisé en ce que** ladite cavité (18) a, s'étendant à partir de l'embouchure d'entrée, une première section qui a ledit premier filetage (20) formé à l'intérieur de cette dernière et une deuxième section inférieure (22) avec des parois lisses plus étroites que la première section.

7. Dispositif selon l'une quelconque des revendications précédentes, **caractérisé en ce que** ledit premier filetage (20) s'étend axialement le long de la totalité de la première section de la cavité (18) du corps en forme de coupelle (12) et ledit troisième filetage (36) s'étend sensiblement sur la totalité de la surface externe (34) de la bague (32).

8. Dispositif selon l'une quelconque des revendications 1 à 6, **caractérisé en ce que** ledit premier filetage (20) s'étend sur une partie de la première section de la cavité (18) du corps en forme de coupelle (12) et ledit troisième filetage (36) s'étend sur une partie de la surface externe du corps (34) de la bague (32).
